# EUROPEAN PATENT APPLICATION

(11) **EP 1 847 440 A1**
(43) Date of publication of application: **24.10.2007**
(21) Application number: 07075227.4
(22) Date of filing: 26.03.2007
(51) Int. Cl.: B62D 1/187

(54) **Steering column assembly for a vehicle**

(30) Priority: 20.04.2006 US 407453
(71) Applicant: Delphi Technologies, Inc., Troy, Michigan 48007 (US)
(72) Inventor: Manwaring, Marvin V., Clio, MI 48420 (US); Huber, Albert C., Montrose, MI 48457 (US); McDonagh, Dennis G., Saginaw, MI 480603 (US)
(74) Representative: Denton, Michael John

(57) **Abstract**

An adjustable steering column assembly (20') for a vehicle has an integral rake pivot joint (68') carried between a mounting structure (22') generally attached to the vehicle chassis and a support bracket (24') that pivots about a pivot axis (46'). A preferably telescoping shaft (26) extends along a centerline (50) and connects to a steering wheel at one end and is rotationally supported near an opposite end by the support bracket. Preferably, the pivot axis is orientated substantially perpendicular to the centerline. The pivot joint has a boss (70') preferably elongated with respect to the pivot axis and generally orientated concentrically to the pivot axis. During assembly, the boss fits pivotally in a bore (80') from a radial direction when in an angular installation position (92). Once installed, the boss is substantially concentric to the pivot axis and is thus carried by the other of the mounting structure and support bracket while pivoting between tilt down and tilt up positions (96, 98). Preferably, a web (74') of the boss projects through a slit (84') extending axially and communicating radially inward with the bore.

## Description

### TECHNICAL FIELD

The present invention relates to a steering column assembly for a vehicle and more particularly to an adjustable steering column assembly.

### BACKGROUND OF THE INVENTION

Steering column assemblies are know to have a rotating shaft connected at one end to a steering wheel and at an opposite end supported by a bracket carrying a bearing race for smooth rotation of the shaft. The rotating shafts typically have a non-rotating jacket sleeve co-extending concentrically with the rotating shaft and spaced radially outward therefrom. For steering column assemblies known to have a tilt adjustment feature, the bracket is support pivotally by a vehicle structure. The pivot joint carried between the bracket and structure has many individual parts and are known to include a separate pin or bolt that must be threaded through a series of holes in both the bracket and the structure. The bolt is secured in place by a threaded nut and a series of washers along its length. Unfortunately, the numerous parts and time consuming assembly of the joint increases manufacturing costs.

Moreover, and particularly for telescoping shaft applications, the jacket sleeve must be rigidly engaged to the bracket so that it is held stationary relative to the shaft and regardless of the steering wheel's tilted position. Typically, a plurality of pins or threaded fasteners with corresponding holes in both the sleeve and the bracket are used to fasten the sleeve to the bracket. The excessive parts again leads to relatively high manufacturing costs.

### SUMMARY OF THE INVENTION AND ADVANTAGES

An adjustable steering column assembly for a vehicle has an integral rake pivot joint carried between a mounting structure generally attached to the vehicle chassis and a support bracket that pivots about a pivot axis. A preferably telescoping shaft extends along a centerline and connects to a steering wheel at a first end and is rotationally supported near an opposite second end by the support bracket. Preferably, the pivot axis is orientated substantially parallel to the centerline. The pivot joint has a boss preferably elongated with respect to the pivot axis and generally orientated concentrically to the pivot axis. The boss fits pivotally in a bore disposed concentrically to the pivot axis and carried by the other of the mounting structure and support bracket. A web portion of the boss projects through a slit extending axially and communicating radially inward with the bore.

Preferably, the support bracket has a through-bore disposed concentrically to the centerline through which the telescoping shaft extends and the second end of the shaft projects in a forward direction with respect to the vehicle. A bearing adaptor fits into a forward portion of the through bore for rotatably supporting the second end of the telescoping shaft. Preferably, a rearward projecting jacket sleeve of the steering column assembly snap fits into a rearward portion of the through-bore and projects concentrically rearward along the centerline with the rotating shaft spaced radially inward.

Objects, features and advantages of the present invention include an adjustable steering column assembly having self lubricating rake pivot joint that is integrated into existing structures. This, and the snap fitting jacket sleeve reduce the number of parts otherwise required for assembly and simplify the assembly process of the steering column assembly. Other advantages include a robust design requiring little or no maintenance and in service has a long and useful life.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of a steering column assembly embodying the present invention;
Figure 2 is a perspective cross section view of the steering column assembly taken along line 2-2 of Figure 1;
Figure 3 is an exploded perspective view of a mounting bracket and support bracket of the steering column assembly;
Figure 4 is an exploded perspective view of the support bracket and a jacket sleeve of the steering column assembly;
Figure 5 is a partial exploded side view of a modified steering column assembly;
Figure 6 is a partial side view of the modified steering column assembly illustrating a down position;
Figure 7 is a partial side view of the modified steering column assembly illustrating an up position; and
Figure 8 is an enlarged side view of the modified steering column assembly of Figure 5.

### DESCRIPTION OF THE PREFERRED EMBODIMENTS

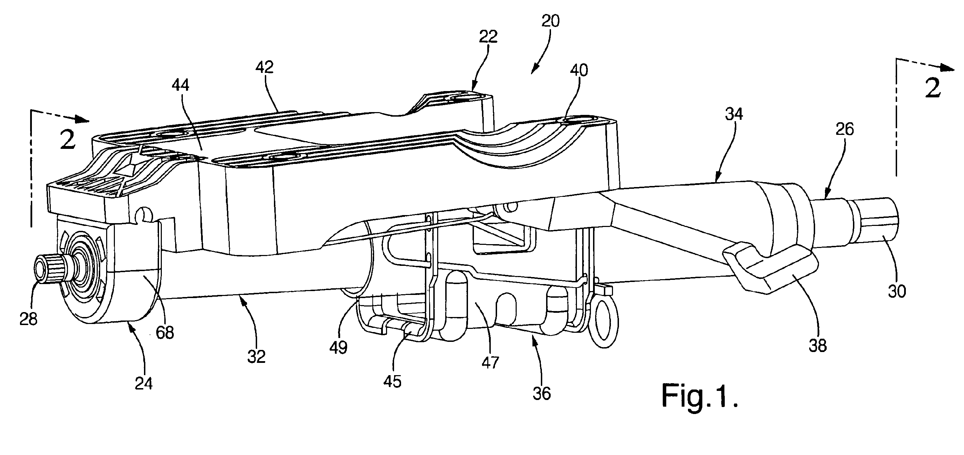

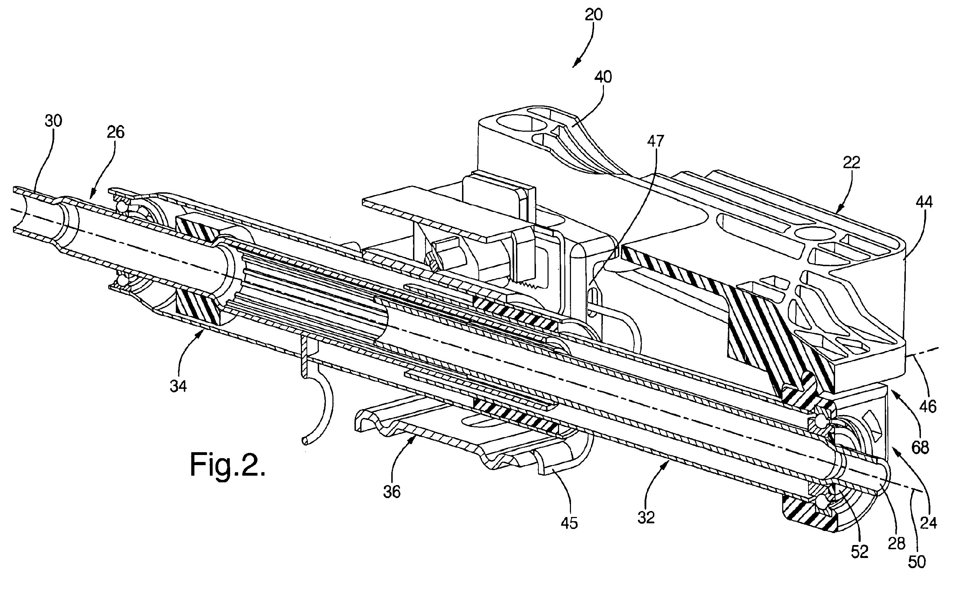

Referring to the Figures, wherein like numerals indicate like or corresponding parts throughout the several views, an adjustable steering column assembly 20 used for a vehicle and embodying the present invention and for a vehicle, has a tilt feature and preferably a telescoping feature that adjusts positioning of a steering wheel (not shown) for driver convenience and comfort. As best illustrated in Figures 1 and 2, the steering column assembly 20 has a preferably stationary mounting structure 22 connected pivotally to a support bracket 24. The support bracket 24 rotatably supports a forward end 28 (with respect to the vehicle) of a preferably telescoping shaft 26 that extends rearward to a rearward end 30 connected to the steering wheel. Spaced radially outward from the telescoping shaft 26 are axially overlapping front and rear jacket sleeves 32, 34. Preferably the front sleeve 32 snap fits to and rigidly projects rearward from the support bracket 24. A support mechanism 36 having a control lever 38 is supported by the mounting structure 22 rearward of the support bracket 24 and lockably controls and restricts adjustment or repositioning of the telescoping shaft 26 and jacket sleeves 32, 34.

The mounting structure 22 of the steering column assembly 20 is preferably fastened to a chassis or underneath a dash of the vehicle by a plurality of threaded fasteners or bolts (not shown) and preferably with respective bushings located between the chassis and structure 22 to reduce the amount of vibration that could otherwise be transmitted to the steering column assembly 20. The structure 22 is generally U-shaped having two substantially parallel legs 40, 42 projecting rearward and substantially horizontally from a base member 44 that pivotally connects to the support bracket 24. A generally U-shaped housing 45 of the support mechanism 36 is orientated in an upright position and has two parallel walls 47, 49 that hang or are connected to the respective legs 40, 42 of the mounting structure 22. The telescoping shaft 26 and the sleeves 32, 34 extend through the housing 45 between the walls 47, 49 and lie substantially parallel to and at least in part below the legs 40, 42.

As best illustrated in Figures 2-4, the support bracket 24 of the steering column assembly 20 is preferably suspended pivotally from the base member 44 of the mounting structure 22 along a pivot axis 46. The shaft 26 projects concentrically through a through-bore 48 in the support bracket 24 and along a centerline 50 orientated substantially perpendicular to and spaced from the pivot axis 46. A bearing adaptor or race 52 is press fitted into a forward portion or opening 54 of the through-bore 48 for rotatably supporting the forward end 28 of the shaft 26 and preferably axially retaining the shaft 26 with respect to the centerline 50.

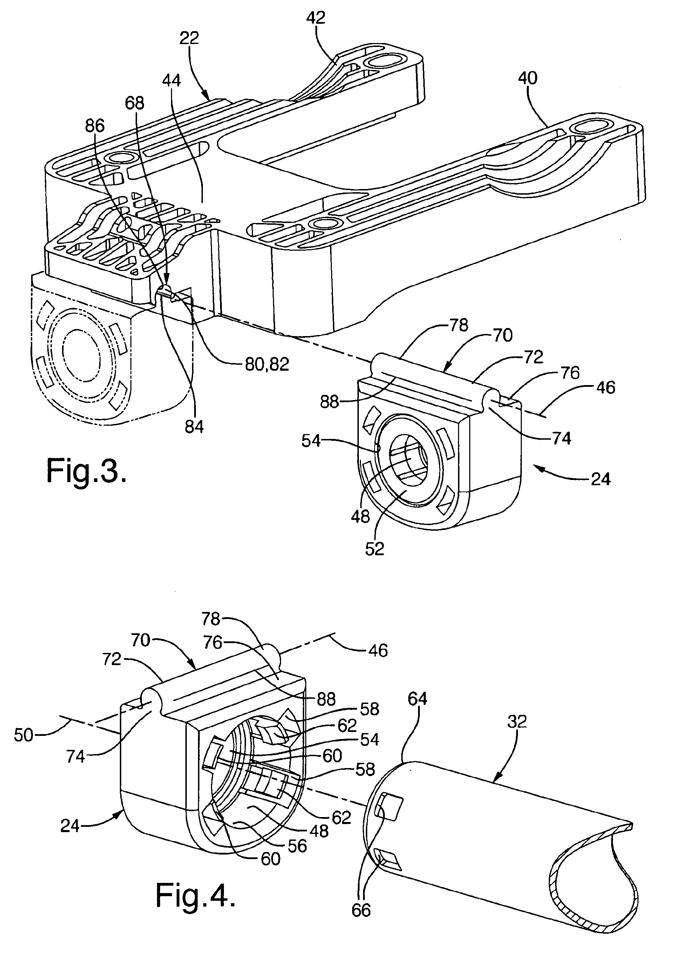

As best illustrated in Figure 4, a rearward portion or opening 56 of the through-bore 48 in the support bracket 24 receives the front sleeve 32. The rearward portion 56 communicates radially outward with four circumferentially spaced and axially extending channels 58. Substantially located in each channel 58 is a resiliently flexible lock arm 60 of the support bracket 24 that projects in a rearward direction to an enlarged distal head 62 of the arm 60 for snap locking to the front sleeve 32. When the lock arm 60 is in an un-flexed or natural state, the enlarged head 62 projects at least in-part radially inward into the rearward portion 56 of the through-bore 48 and is spaced radially inward from the bottom of the channels 58 carried by the support bracket 24.

The front sleeve 32 is preferably substantially cylindrical having an outer diameter that is slightly less than an inner diameter of the rear sleeve 34 (i.e. rearward with respect to the vehicle). A forward end 28 of the front sleeve 32 has a continuous peripheral edge 64 and preferable four recesses or holes 66 located rearward of the edge 64. The holes 66 are opened at least radially inward and spaced circumferentially about the sleeve 32 to align with the enlarged heads 62 of the lock arms 60 when the front sleeve 32 is snap fitted to the support bracket 24.

A rack pivot joint 68 pivotally engages the support bracket 24 to the base member 44 of the mounting structure 22 and about the pivot axis 46. Preferably, the pivot joint 68 does not have any dedicated individually separated parts, and instead is completely integrated and carried between the support bracket 24 and the base member 44. As best shown in Figures 3 and 4, the pivot joint 68 has a boss 70 preferably formed to the support bracket 24 and elongated axially with respect to the pivot axis 46.

The boss 70 has a substantially cylindrical pin 72 disposed concentrically to the pivot axis 46 and a co-extending web 74 that projects laterally outward from a substantially planar exterior face 76 carried by the support bracket 24 and located above the through-bore 48. The pin 72 carries a substantially cylindrical convex surface 78 that is contiguous to the exterior face 76 at the web 74. The convex surface 78 angularly extends circumferentially about the pivot axis 46 by an amount greater than one-hundred and eighty degrees from one side of the web 74 to the other.

During assembly, the pin 72 of the boss 70 is received in a bore 80 of the rack pivot joint 68 in the base member 44 of the mounting structure 22 (see Figure 3). Preferably, the bore 80 has an open end 82 for axial receipt of the pin 72. A slit 84 in the base member 44 of the mounting structure 22 extends axially with respect to the pivot axis 46 and communicates radially inward with the bore 80 for receipt of the web 74. Thus, when fully assembled, the web 74 projects laterally through the slit 84 and forms to the pin 72 disposed rotatably in the bore 80. The bore 80 is generally defined by a substantially cylindrical concave surface 86 carried by the base member 44 and angularly extending circumferentially greater than one-hundred and eighty degrees for suspending the support bracket 24 from the mounting structure 22.

The convex surface 78 of the pin 72 preferably defines at least one axial extending groove 88 that distributes lubricant between surfaces 78, 86 for substantially friction-free pivoting. To prevent the support bracket 24 from falling out of the bore 80 in the base member 44 of the mounting structure 22, the concave surface 86 extends circumferentially at a greater angular distance than the convex surface 78 of the pin 72 of the boss 70. Preferably, the support bracket 24 and thus the steering wheel is constructed to pivot or tilt by an amount of about fifteen degrees. The width of the slit 84 must therefore be greater than the thickness of the web 74 by a circumferential distance equating to greater than fifteen degrees.

The support bracket 24 is preferably made of injection molded plastic and as one unitary piece with the resilient lock arms 60. The front sleeve 32 is preferably made of metal for rigidity. One skilled in the art would now know that various elements of the invention can be reversed. For instance, the boss 70 of the rake pivot joint 68 could be in the support bracket 24 and the boss 70 formed to the mounting structure 22. Moreover, the boss 70 need not have an elongated pin 72 but instead could carry an enlarged and generally spherical head thus altering the pivot axis 46 to a pivot point.

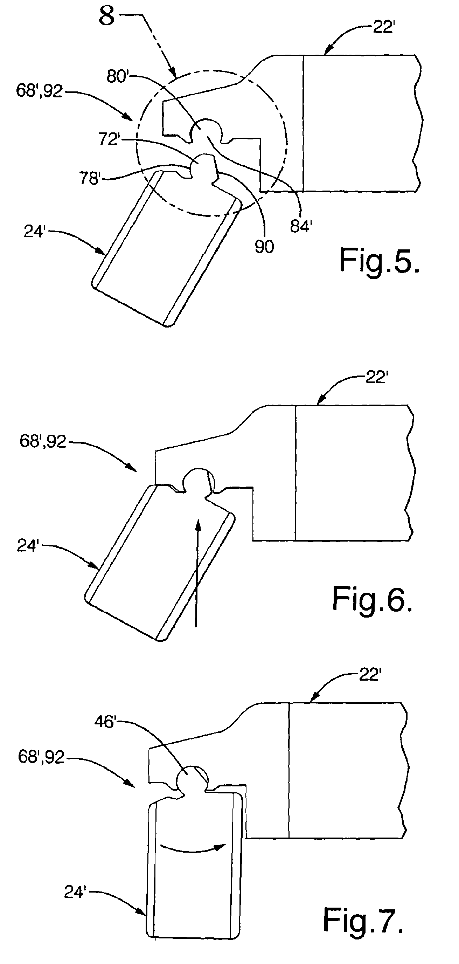

Referring to Figures 5-8 where similar elements of assembly 20 are identified with like numerals and with the addition of a prime symbol, a modification of the rake pivot joint 68' is illustrated wherein a pin 72' formed unitary to a support bracket 24' is inserted radially into a bore 80' in a mounting structure 22' and with respect to a pivot axis 46'. To enable this radial insertion, a substantially cylindrical convex surface 78' of a pin 72' has a substantially planar portion 90 that extends axially with respect to the pivot axis 46'. The diametric distance of the pin 72' from the planar portion 90 and through the pivot axis 46' is equal to or slightly less than the width of the slit 84' that communicates radially inward to the bore 80'. Consequently, when support bracket 24' is orientated at a pre-specified, angular, installation position 92 the pin 72' can be raised laterally into the bore 80' through the slit 84'. Because full tilt down and full tilt up positions 94, 96 do not correspond to the angular alignment of the installation position 92, the rake pivot joint 68' will remain coupled.

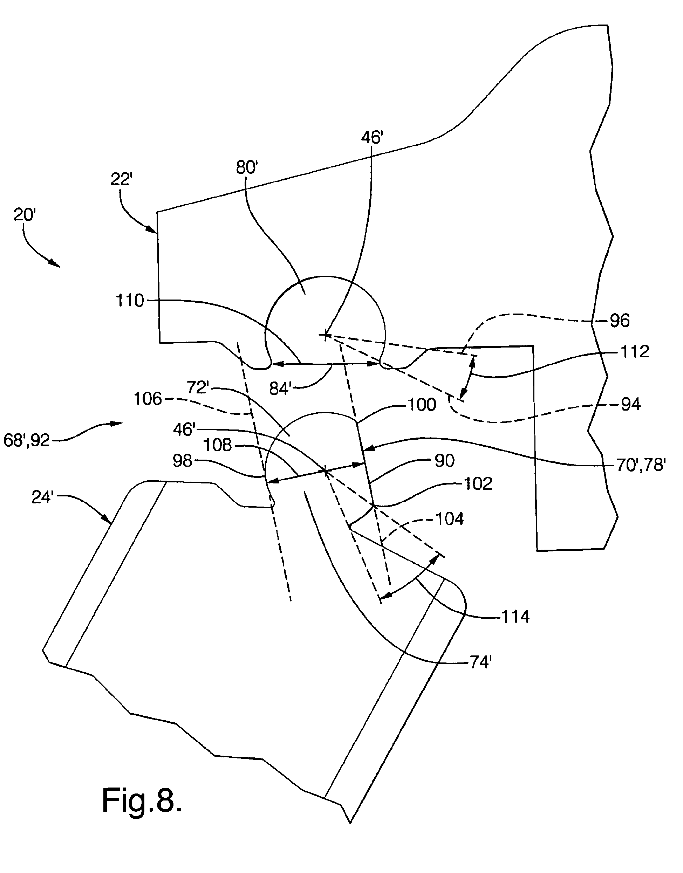

As best illustrated in Figure 8, the convex surface 78' is substantially cylindrical and concentric with respect to pivot axis 46'. The convex surface 78' has a first cylindrical portion 98 that extends circumferentially from the web 74' and in a counter-clockwise direction to a first point or axially extending apex 100. From the first apex 100 the substantially planar or non-concave portion 90 spans laterally with respect to the pivot axis 46' to a second apex 102. A second cylindrical portion 104 extends circumferentially in the counter-clockwise direction from the second point or apex 102 to the web 74'. Although one skilled in the art would now know that the planar portion 90 could be concave, the first and second apexes 100, 102 both lie in an imaginary plane 104 with the planar portion 90 that is spaced from and parallel to the pivot axis 46'. An opposite imaginary plane 106 located tangentially to the first cylindrical portion 98 is parallel to the first imaginary plane 104 and spaced by a distance 108 that is measured generally through the pivot axis 46'.

So that the pin 72' of the boss 70' can be inserted radially into the bore 80', the radial distance 108 of the pin 72' is preferably slightly less than a width 110 of the slit 84' of the bore 80'. Alternatively, the radial distance 108 could be equal to or even slightly greater than the width 110 thus enabling a snap fit engagement. However, any such snap fit engagement should not cause plastic deformation of either the structure 22' or the bracket 24' that could potentially hinder pivotal movement.

When the steering column assembly 20' pivots between the tilt down and tilt up positions 94, 96, the bracket 24' pivots at a maximum angular displacement, represented as arrow 112 in Figure 8. This angular displacement 112 is less than the angular distance, represented as arrow 114 that represents the circumferential spanning of the second cylindrical portion 104 from the web 74' to the second apex 102. Because angular displacement 112 is less than angular distance 114, release of the support bracket 24' from the mounting structure 22' after assembly of the steering column assembly 20' and during tilt operation. Preferably, the support mechanism 36 provides the necessary stops for the tilt down and up positions 94, 96. However, one skilled in the art would now know that for at least the tilt up position 96, the stop or contact relationship can be carried directly between the mounting structure 22' and the support bracket 25'.

The invention has been described in an illustrative manner, and it is to be understood that the terminology which has been used is intended to be in the nature of words of description rather than of limitation. For instance, orientation of components with respect to the vehicle can be changed from "forward" and "rearward" to "lower" and "upper". As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. An adjustable steering column assembly (20') for a vehicle comprising:
a structure (22');
a bracket (24') having an angular installation position (92), a tilt down position (94) and a tilt up position (96) with respect to a pivot axis (46'), wherein angular installation position is not located between the tilt down and tilt up positions;
a pivot joint (68') having an axially extending bore (80') having an axially extending and narrowed slit (84') both located in one of the structure and the bracket, and an axially extending boss (70') projecting unitarily outward from the other of the structure and the bracket as one piece, wherein the boss extends radially through the slit and is disposed substantially in the bore for movement of the bracket about the pivot axis and with respect to the structure; and
wherein the boss is inserted through the slit and into the bore when in the angular installation position.

2. The adjustable steering column assembly set forth in claim 1 further comprising:
an axially elongated web (74') of the boss projecting laterally outward from the other of the structure and the bracket and projecting through the slit; and
an axially elongated pin (72') of the boss attached and enlarged with respect to the web and located rotatably in the bore.

3. The adjustable steering column assembly set forth in claim 2 wherein the structure is stationary with respect to the vehicle.

4. The adjustable steering column assembly set forth in claim 3 wherein the bore is in the structure and the web projects laterally from the bracket.

5. The adjustable steering column assembly set forth in claim 4 wherein the bracket is suspended from the structure by the pivot joint when not in the angular installation position.

6. The adjustable steering column assembly set forth in claim 5 wherein the pin carries a surface (78') having first cylindrical portion (98) extending circumferentially counter-clockwise from the web, a second cylindrical portion (104) extending clockwise from the web, and a non-convex portion (90) disposed circumferentially between the first and second cylindrical portions.

7. The adjustable steering column assembly set forth in claim 6 further comprising:
the non-convex portion generally lying in a first imaginary plane (104) disposed parallel to the pivot axis;
a second imaginary plane (106) orientated tangentially to the first cylindrical portion and disposed parallel to the first imaginary plane;
a radial distance (108) measured between the first and second imaginary planes and through the pivot axis; and
a width (110) of the slit being slightly greater than the radial distance.

8. The adjustable steering column assembly set forth in claim 7 further comprising:
the second cylindrical portion extending circumferentially by an angular distance (114); and
an angular displacement (112) measured between the tilt down and tilt up positions and with respect to the pivot axis, wherein the angular displacement is less than the angular distance.

9. The adjustable steering column assembly set forth in claim 2 further comprising at least one axially extending groove (88) in the pin and communicating laterally with the bore for lubricating the pivot joint.

10. The adjustable steering column assembly set forth in claim 1 further comprising:
a through-bore (48) in the bracket having a centerline (50) orientated perpendicular to the pivot axis; and
a jacket sleeve (32) projecting outward from the bracket and disposed concentrically to the centerline.

11. The adjustable steering column assembly set forth in claim 10 wherein the sleeve snap fits to the bracket.

12. The adjustable steering column assembly set forth in claim 11 wherein the sleeve snap fits to the bracket in the through-bore.

13. The adjustable steering column assembly set forth in claim 12 further comprising a bearing race (52) supported by the bracket in the through-bore and disposed concentrically to the centerline.

14. The adjustable steering column assembly set forth in claim 12 further comprising:
at least one flexible lock arm (60) of the bracket disposed in the through-bore; and
at least one recess (66) in the sleeve opened at least radially outward with respect to the centerline for snap fitting receipt of the at least one lock arm.

15. The adjustable steering column assembly set forth in claim 1 wherein the boss snap fits to one of the structure and the bracket during radial insertion into the bore and without causing plastic deformation.
